# EUROPEAN PATENT SPECIFICATION

(11) **EP 1 772 390 B1**
(45) Date of publication and mention of the grant of the patent: **25.11.2009**
(21) Application number: 06020812.1
(22) Date of filing: 04.10.2006
(51) Int. Cl.: B65D 19/42

(54) **Pallet**
Palette
Palette

(30) Priority: 06.10.2005 GB 0520338
(43) Date of publication of application: 11.04.2007
(73) Proprietor: Linpac Allibert Limited, Birmingham B37 7YN (GB)
(72) Inventor: Loftus, Stephen Clive, Walsall West Midlands WS3 4JN (GB); Dent, Matthew David, Northwich Cheshire (GB); Mallan, Lee Buchanan, Hartford Northwich CW8 3AQ (GB)
(74) Representative: Jacob, Reuben Ellis

(56) References cited:
- FR-A1- 2 308 558
- US-A- 1 058 837
- US-A- 2 572 348

## Description

The present invention relates to a pallet.

Pallets are commonly used for example in warehouses to assist in the transportation of goods. A typical pallet consists of a low platform on which goods may be stacked. The platform is normally open on one or more sides so that the forks of a lifting truck can be inserted, allowing the palletised load to be lifted and moved. Palletised goods can be easily moved, stored and transported.

The tines of a forklift truck are normally quite long (e.g. 80-100cm) and this can sometimes make it difficult or impossible to insert or remove the fork underneath a palletised load in a confined space. In addition, the use of fork lift trucks is sometimes prohibited in areas to which the public have access, for example in shops. Normal pallets may not therefore be suitable for use in such a situation. Furthermore, palletised goods cannot normally be moved by hand.

Another possibility is to use a wheeled dolly. Dollies allow goods to be moved easily by hand, without the need for a fork lift truck. They are therefore suitable for use in public areas such as shops. However, they are less suitable for transportation and storage as they have a tendency to move around during transportation (even if wheel brakes are provided). Additionally, they do not stack well and they are more expensive than pallets.

It is also known to provide a pallet with a pair of wheels adjacent one edge of the pallet, which are fixed in a position so that when the pallet is standing on flat ground, the wheels are just clear of the ground. However, by lifting the opposite edge of the pallet slightly (using a special lifting device) to tilt the pallet, the wheels can be brought into contact with the ground, allowing the pallet to be moved.

Although the wheeled pallet described above goes part of the way to making pallets suitable for use in shops, there are a number of problems. In particular, a special lifting device is required to move the pallet, which is expensive and easily damaged. In addition, because the pallet has to be tilted before it can be moved, this can make it difficult to manouevre the loaded pallet into certain locations (for example, against a wall). Tilting the pallet can also affect the stability of the goods loaded onto the pallet.

FR2308558 describes a pallet with retractable wheels mounted on pivot arms. The wheels are deployed by rotating the arms through 90° from a horizontal position to a vertical position. This arrangement provides inadequate support for the wheels, particularly if castors are used.

US 1,058,837 describes casters for furniture, such as tables, comprising a retractable wheel that is attached to a leaf. The caster further comprises a pivotal support element having an inner end attached to a pintle pin and an outer end attached to the wheel. A latch-plate is used for locking the retractable wheel in the deployed condition.

It is an object of the present invention to provide a pallet that mitigates one or more of the aforesaid problems.

According to the present invention there is provided a pallet as defined in claim 1.

The provision of retractable wheels makes it possible to adapt the pallet to a dolly form, allowing it to be moved easily by hand without needing any special lifting device. This makes it easier to use in confined spaces. The retractable wheel mechanism avoids any need to tip the pallet, so allowing the loaded pallet to be placed flush against a vertical wall. The stability of the loaded goods is also unaffected. When the wheels are retracted, the pallet is supported by the support structure and can be lifted and moved in a conventional manner using a forklift truck. Because the wheels are retractable when the pallet is not being moved, they do not hinder transportation or storage of the pallet.

The retractable wheels are attached to pivotal support elements, each pivotal support element having an inner end attached to a pivot and an outer end attached to one or more of the wheels. This trailing arm design adds greatly to the strength and stability of the structure and avoids any tendency ofthe wheels to twist or wobble in use. Advantageously, the pivot has a pivot axis that extends substantially parallel to the deck, and preferably to a transverse axis of the deck.

The locking mechanism preferably includes means for lifting the wheels clear ofthe ground when fully retracted. This prevents the wheels from dangling down when the pallet is lifted using a forklift truck. The lifting means may for example consist of a spring or other resilient element.

In one preferred embodiment, the locking mechanism includes a crank element. In another preferred embodiment, the locking mechanism includes a wedge element. These embodiments have the advantage of being simple and effective. However, many other forms of locking mechanism may also be suitable. The locking mechanism may optionally include means for locking the wheels in a retracted condition.

The locking mechanism preferably includes an operating handle located towards an end or both ends of the pallet. This allows easy access to the locking mechanism.

Preferably, the retractable wheels include a pair of pivotal castors. The other wheels may be either castors or fixed wheels.

An embodiment of the present invention will now be described, by way of example, with reference to the accompanying drawings, in which:
Figure 1 is a perspective view from above of a pallet according to a first embodiment ofthe invention, with the wheels in a retracted condition;
Figure 2 is a perspective view of the first pallet from below, with the wheels in a retracted condition;
Figure 3 is a sectional perspective view of the pallet with the wheels in a deployed condition;
Figure 4 is a sectional perspective view of the pallet with the wheels in a partially retracted condition;
Figure 5 is a sectional perspective view of the pallet with the wheels in a fully retracted condition;
Figure 6 is a perspective view of the pallet with the deck removed, showing one pair of wheels in a deployed condition and the other pair of wheels in a retracted condition;
Figure 7 is a perspective view from above of a pallet according to a second embodiment of the invention, with the wheels in a retracted condition;
Figure 8 is a perspective view of the second pallet from below, with the wheels in a retracted condition;
Figure 9 is a sectional side view on line A-A of figure 7, with the wheels in a retracted condition;
Figure 10 is a sectional side view on line B-B of figure 7, with the wheels in a retracted condition, and
Figure 11 is a sectional side view on line A-A, with the wheels in a deployed condition.

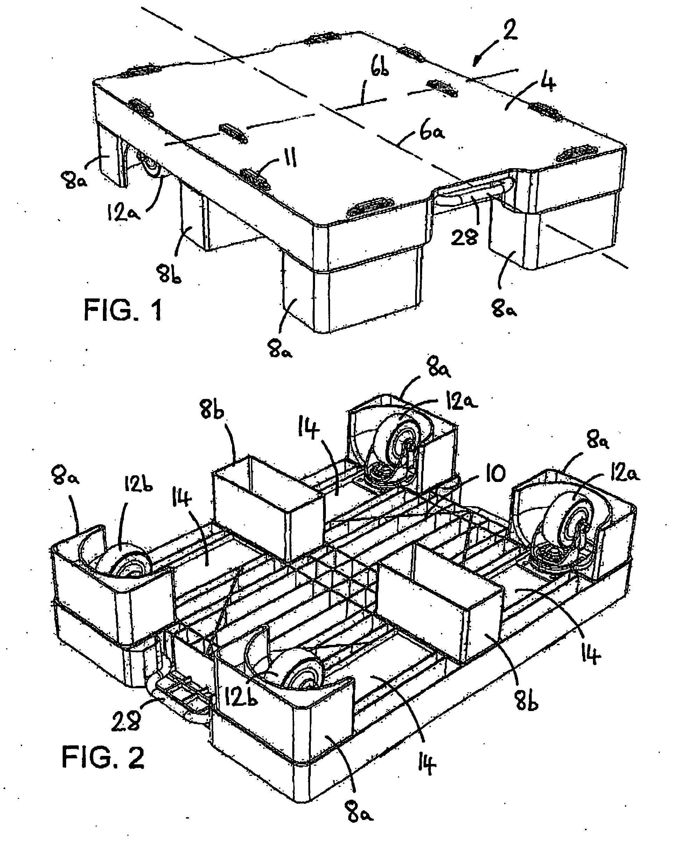

A pallet 2 according to a first embodiment of the invention is shown in Figures 1-6. The pallet 2 includes a generally rectangular deck 4, having a longitudinal axis 6a and a transverse axis 6b. The deck 4 is supported by a support structure comprising six legs (or bearers) 8a,b. Four of the legs 8a at are located at the corners of the deck 2, the other two legs 8b being located below the transverse axis 6b of the deck 4. The gaps between the legs are adapted to receive the tines of a forklift truck, allowing the pallet and any loaded goods to be lifted and transported.

The deck 4 and the legs 8a,b are made of a plastics material and are generally hollow. A large number of reinforcing ribs 10 are provided on the underside of the deck 4 to increase its rigidity. A number of pop-up detents 11 are provided on the upper surface of the deck 4, to prevent movement of goods loaded onto the pallet.

Four retractable wheels 12a,b are attached to the underside of the deck 4 near the four corners of the deck, each wheel 12a,b being accommodated within one of the hollow corner legs 8a. Two of the wheels 12a located at one end of the deck are pivotable swivel castors, while the other two wheels 12b located at the other end of the deck are non-pivotable fixed wheels.

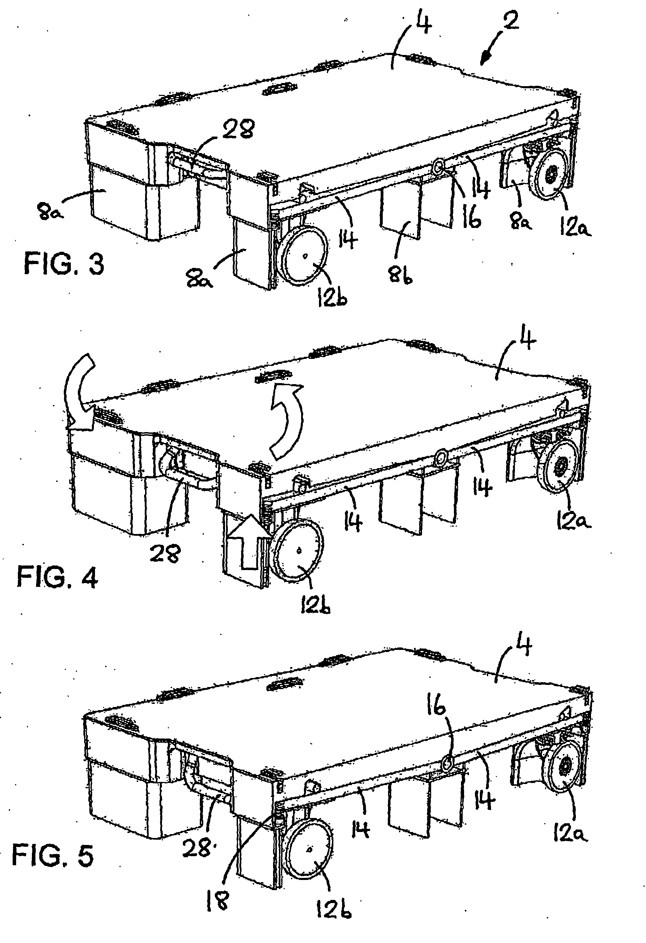

Each wheel 12a,b is attached to a free end of a pivotal arm 14, the other end of the arm being pivotally attached to the underside of the deck 4 by a pivot joint 16 located below the transverse axis 6b of the deck 4, The pivot axis of the pivot joint 16 extends parallel to the transverse axis 6b. The wheels 12a,b are thus mounted for arcuate movement about the pivot axis between a deployed condition as shown in figure 3 in which the wheels extends downwards beyond the legs 8a,b to support the pallet on the ground, and a retracted condition as shown in figure 5 in which the wheels are retracted upwards and the pallet is supported by the legs 8a,b. The pivotal arms 14 provide a strong and stable support for the wheels 12a,b preventing them from twisting or wobbling during use. This is particularly important in the case of the pivotal castors 12a, as large moments can be applied to those wheels because the point at which the wheel engages the ground is offset from the vertical pivot axis. Compression springs 18 located between the free ends of the arms 14 and the corner legs 8a urge the arms upwards, thus biassing the wheels 12a,b towards the retracted condition.

A releasable locking mechanism 20 is provided for controlling the position of the wheels and in particular for locking the retractable wheels in the deployed condition. The releasable locking mechanism 20 includes two crankshafts 22a,b that are rotatably mounted on the underside of the deck 4 at opposite ends of the deck. The two crankshafts are similar and the following description therefore applies to both of them.

Each crankshaft 22a,b is mounted for rotation about a pivot axis that extends parallel to the transverse axis 6b of the deck 4 and includes four drive portions 26a,b that are slidingly received in slotted openings (not shown) in the underside of the deck 4. The crankshaft 22a,b is secured in position by the corner legs 8a, which fit over the drive portions 26a,b. The crankshaft includes a centre crank 28 located between the two inner drive portions 26a and two side cranks 30, each of which is located between an outer drive portion 26b and the adjacent inner drive portion 26a. The centre crank 28 serves as a handle for operating the locking mechanism. The two side cranks 30, which are displaced at an angle of approximately 90° relative to the centre crank 28, are received in cylindrical bearings 32 attached to the upper surfaces of the arms 14.

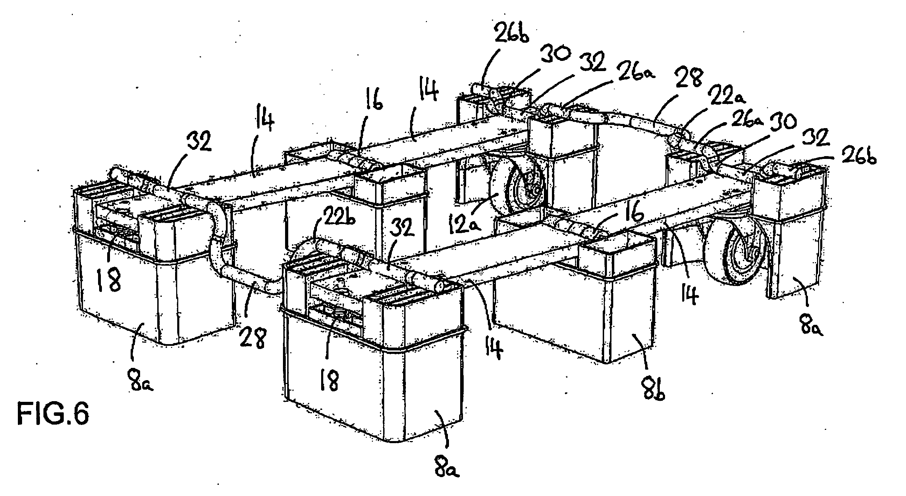

Rotating the crankshafts 22a,b allows the wheels to be configured in either a retracted condition or a deployed condition. In figure 6, the first crankshaft 22a is shown in a deployed condition: the operating handle 28 has been rotated upwards and outwards and this has driven the side cranks 30, the arms 14 and the wheels 12a downwards. In this position, the wheels 12a extend beyond the lower ends of the corresponding legs 8a so that in use they will engage the ground.

The second crankshaft 22b is shown in a retracted condition; the operating handle 28 has been rotated downwards and inwards, which has driven the side cranks 30, the arms 14 and the wheels 12b upwards. In this position, the wheels 12b are retracted into the corresponding legs 8a and so do not engage the ground.

The crankshafts 22a,b are arranged so that when the wheels 12a,b are in a deployed condition, the side cranks 30 are in an over-centre position thus locking the wheels in that condition. When the wheels are retracted, the compression springs 18 retain them in that condition.

Use of the pallet is illustrated in figures 3 to 5. The drawings are sectional to illustrate the internal components of the retractable wheels and the locking mechanism.

In figure 3, the pallet is shown with the wheels 12a,b in a deployed condition so that they engage the ground and fully support the pallet. The legs 8a,b are thus lifted clear of the ground. The pallet is thus configured for use as a dolly, which allows the pallet and any loaded goods to be moved about easily by hand.

Figure 4 shows the pallet with the wheels in a partially retracted condition. The operating handles 28 have been rotated partially downwards, causing the wheels 12a,b to retract partially into the corner legs 8a.

In Figure 5 the pallet is shown with the wheels in a fully retracted condition. The operating handles 28 have been rotated fully downwards and the wheels 12a,b have been retracted fully within the legs 8a under the influence of the compression springs 18. In this condition the weight of the pallet is supported entirely by the legs 8a,b. The pallet can be lifted and moved using a forklift truck and it is thus in a suitable condition for transportation and storage.

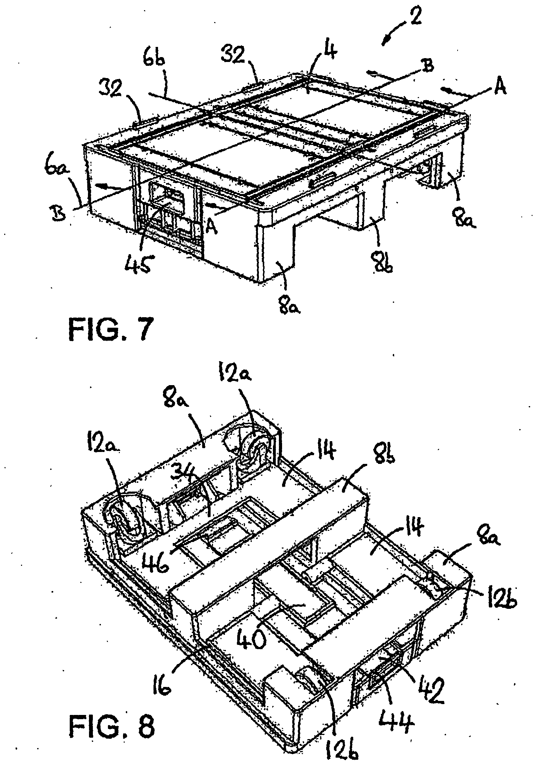

A pallet 2 according to a second embodiment of the invention is shown in Figures 7-11. The pallet 2 includes a generally rectangular deck 4, having a longitudinal axis 6a and a transverse axis 6b. The deck 4 is supported by a support structure comprising three legs (or bearers) 8a,b. Two of the legs 8a are located at the ends of the deck 2, the other leg 8b being located below the transverse axis 6b of the deck 4. The gaps between the legs are adapted to receive the tines of a forklift truck, allowing the pallet and any loaded goods to be lifted and transported. Optionally, the centre leg 8b may be omitted without affecting operation of the pallet.

The deck 4 and the legs 8a,b are made of a plastics material and are generally hollow. A number of abutments 32 are provided on the upper surface of the deck 4, to prevent movement of goods loaded onto the pallet.

Four retractable wheels 12a,b are attached to the underside of the deck 4 near the four corners of the deck, each wheel 12a,b being accommodated within one of the hollow end legs 8a. In this embodiment, two of the wheels 12a located at one end of the deck are pivotable swivel castors, while the other two wheels 12b located at the other end of the deck are non-pivotable fixed wheels. Alternatively, four castors or four fixed wheels may be provided.

Each wheel 12a,b is attached to a free end of a pivotal arm 14, the other end of the arm being pivotally attached to the underside of the deck 4 by a pivot joint 16 located below the transverse axis 6b of the deck 4. Each pair of pivotal arms 14 is connected by a crossmember 34, which prevents sideways displacement of the legs and ensures that the legs move together. The pivot axis of each pivot joint 16 extends parallel to the transverse axis 6b.

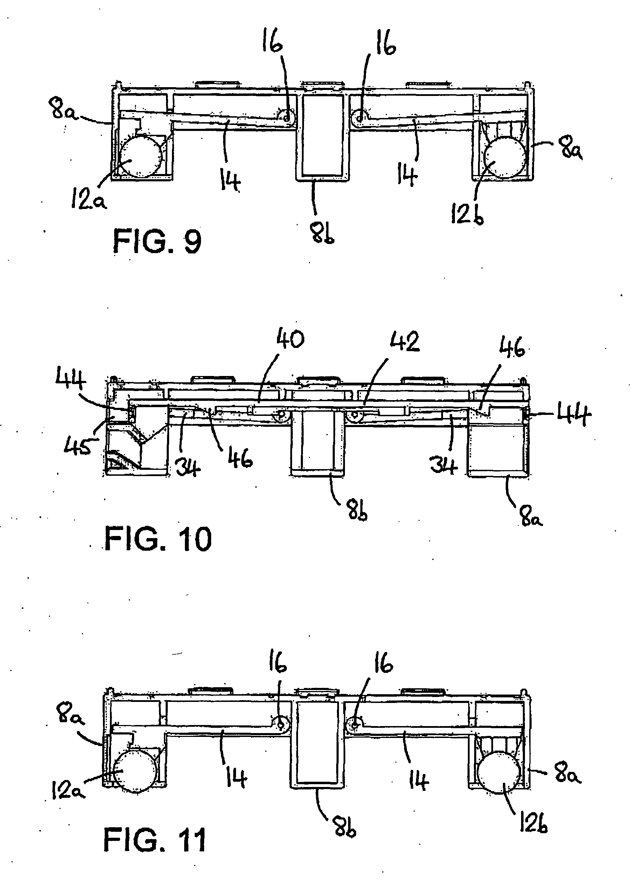

Each wheel 12a,b is thus mounted for arcuate movement about its pivot axis between a deployed condition as shown in figure 11 in which the wheels extends downwards beyond the legs 8a,b to support the pallet on the ground, and a retracted condition as shown in figures 8 and 9 in which the wheels are retracted upwards and the pallet is supported by the legs 8a,b. The pivotal arms 14 provide strong and stable supports for the wheels 12a,b preventing them from twisting or wobbling during use. This is particularly important in the case of the pivotal castors 12a, as large moments can be applied to those wheels because the point at which the wheel engages the ground is offset from the vertical pivot axis. Compression springs (not shown) may be located between the free ends ofthe arms 14 and the corner legs 8a urge the arms upwards, thus biassing the wheels 12a,b towards the retracted condition.

A releasable locking mechanism 40 is provided for controlling the position of the wheels and in particular for locking the retractable wheels in the deployed condition. The releasable locking mechanism 40 comprises an elongate beam 42 that is located underneath the deck 4 and extends along the length of the deck beneath the longitudinal axis 6a. The beam 42 is mounted for sliding movement in the direction of the longitudinal axis 6a between a first position in which the wheels 12a,b are deployed and a second position in which the wheels 12a,b are retracted. A handle 44 is provided at each end of the beam 42, allowing its position to be adjusted manually. Apertures 45 are provided in each end of the platform, allowing the handles 44 to be grasped. The apertures 45 may also serve as locating devices to which a manoeuvring handle (not shown) may be attached.

On the underside of the beam 42 two wedge members 46 are provided. These are positioned to engage the cross-members 34 as the beam is pulled from the right-hand position as shown in figure 10 to the left-hand position. The wedge members 46 then engage the cross-members 34 and urge the wheels 12a,b downwards and lock them in the deployed position as shown in figure 11. When the beam is returned to the right-hand position as shown in figure 10, the wedge members 46 disengage the cross-members 34 and allow the wheels 12a,b to return upwards to the retracted position. As mentioned above, the arms 14 may optionally be spring-biassed to ensure that the wheels remain retracted unless locked in the deployed position.

Use of the pallet is illustrated in figures 9 to 11. The drawings are sectional to illustrate the internal components of the retractable wheels and the locking mechanism.

Figures 9 and 10 show the pallet with the wheels in a retracted condition. The beam 42 has been pulled to the right, allowing the wheels 12a,b to retract into the end legs 8a. In this condition the weight of the pallet is supported entirely by the legs 8a,b. The pallet can be lifted and moved using a forklift truck and it is thus in a suitable condition for transportation and storage.

In figure 11, the pallet is shown with the wheels 12a,b in a deployed condition so that they engage the ground and fully support the pallet. The beam 42 (not shown) has been pulled to the left, urging the wheels 12a,b downwards and locking them in the deployed condition. The legs 8a,b are thus lifted clear of the ground and the pallet is configured for use as a dolly, which allows the pallet and any loaded goods to be moved about easily by hand.

Various modifications of the pallet system described above are of course possible. For example, the pallet may have more or fewer than six legs. Although four wheels and/or castors are preferred, more or fewer may be provided.

The locking mechanism may take various other forms: for example, a cam mechanism could be used, or the wheels could be locked in the deployed position by inserting a simple locking pin. The locking mechanism may be arranged to operate on all of the wheels simultaneously, on pairs or groups of wheels, or each of the wheels individually.

Although the specific embodiment of the pallet as shown in the drawings and described above is not intended to be converted from pallet form to dolly form while it is loaded with goods, the locking mechanism may include a drive mechanism that allows it to be converted while loaded. This drive mechanism may be driven from an external power source (for example, a pneumatic or electrical power source), or it may include a mechanical drive system (for example using gears or a worm mechanism) that allows it to be operated manually.

In the specific embodiment shown in the drawings, when the wheels are retracted they are lifted clear of the ground by the compression springs. Those springs may however be omitted so that when the wheels are retracted they still rest against the ground, but without supporting the weight of the pallet and the loaded goods.

If required, recesses may be provided in the upper surface of the deck, to accommodate the wheels of a second pallet that is stacked on top of the first pallet with the wheels in a deployed condition. Generally, however, it will be better practice to retract the wheels when stacking the pallets.

## Claims

1. A pallet (2) including a deck (4) having two opposite ends and a transverse axis a support structure for supporting the deck (4) above the ground, a plurality of retractable wheels (12a,12b) that can be configured in a deployed condition in which they fully support the pallet (2) or a retracted condition, and a releasable locking mechanism (20) for locking the retractable wheels (12a,12b) in the deployed condition, **characterised in that** the retractable wheels (12a,12b) are attached to pivotal support arms (14), each pivotal support arms (14) having an inner end pivotally attached to the underside of the deck (4) by a pivot joint (16) located below the transverse axis (66) of the deck (4) and an outer end attached to one or more of the wheels (12a,12b), said outer end being located outwards of the inner end extending towards an end of the deck (4) in both the retracted condition and the deployed condition, so that the wheels (12a,12b) are mounted for arcuate movement about the pivot joint (16).

2. A pallet (2) according to claim 1, wherein the pivot joint (16) has a pivot axis that extends substantially parallel to the deck (4).

3. A pallet (2) according to any one of the preceding claims, wherein the locking mechanism (20) includes means for lifting the wheels (12a,12b) clear of the ground when fully retracted.

4. A pallet (2) according to any one of the preceding claims, wherein the locking mechanism (20) includes a crank element (22a,22b,28,30).

5. A pallet (2) according to any one of claims 1 to 3, wherein the locking mechanism includes a wedge element (46).

6. A pallet (2) according to any one of the preceding claims, wherein the locking mechanism (20) includes an operating handle (44) located towards an end of the pallet (2).

7. A pallet (2) according to any one of the preceding claims, wherein the retractable wheels (12a,12b) include a pair of pivotal castors.

## Patentansprüche

1. Palette (2) mit einer Ladefläche (4), die zwei entgegengesetzte Enden und eine Querachse aufweist, einer Tragkonstruktion zur Unterstützung der Ladefläche (4) oberhalb des Bodens, einer Vielzahl einziehbarer Räder (12a, 12b), die in einem Einsatz-Zustand, in dem sie die Palette (2) vollständig unterstützen, oder einem eingezogenen Zustand konfiguriert werden können, und ein lösbarer Verriegelungsmechanismus (20) zum Verriegeln der einziehbaren Räder (12a, 12b) in dem Einsatz-Zustand, **dadurch gekennzeichnet, dass**
die einziehbaren Räder (12a, 12b) an schwenkbaren Tragarmen (14) befestigt sind, wobei jeder schwenkbare Tragarm (14) ein Innenende aufweist, das durch ein Drehgelenk (16) schwenkbar an der Unterseite der Ladefläche (4) befestigt ist, wobei sich das Drehgelenk unterhalb der Querachse (66) der Ladefläche (4) befindet und ein Außenende aufweist, das an einem oder mehreren der Räder (12a, 12b) befestigt ist, wobei das Außenende sich auswärts des Innenendes befindet und sich sowohl im eingezogenen als auch im Einsatz-Zustand in Richtung auf ein Ende der Ladefläche (4) erstreckt, sodass die Räder (12a, 12b) für eine bogenförmige Bewegung um das Drehgelenk (16) montiert sind.

2. Palette (2) nach Anspruch 1, wobei das Drehgelenk (16) eine Schwenkachse aufweist, die sich im Wesentlichen parallel zu der Ladefläche (4) erstreckt.

3. Palette (2) nach einem der vorangehenden Ansprüche, wobei der Verriegelungsmechanismus (20) Mittel umfasst, um die Räder (12a, 12b) vom Boden abzuheben, wenn sie vollständig eingezogen sind.

4. Palette (2) nach einem der vorangehenden Ansprüche, wobei der Verriegelungsmechanismus (20) ein Kurbelelement (22a, 22b, 28, 30) umfasst.

5. Palette (2) nach einem der Ansprüche 1 bis 3, wobei der Verriegelungsmechanismus ein Keilelement (46) umfasst.

6. Palette (2) nach einem der vorangehenden Ansprüche, wobei der Verriegelungsmechanismus (20) einen Betätigungsgriff (44) umfasst, der sich in Richtung auf ein Ende der Palette (2) befindet.

7. Palette (2) nach einem der vorangehenden Ansprüche, wobei die einziehbaren Räder (12a, 12b) ein Paar schwenkbare Rollen umfassen.

## Revendications

1. Palette (2) comportant un plancher (4) présentant deux extrémités opposées et un axe transversal, une structure de support pour supporter le plancher (4) au-dessus du sol, une pluralité de roues rétractables (12a, 12b) qui peuvent être configurées dans une configuration déployée dans laquelle elles supportent complètement la palette (2) ou dans une configuration rétractée, et un mécanisme de verrouillage libérable (20) permettant de bloquer les roues rétractables (12a, 12b) dans la configuration déployée, **caractérisée en ce que** les roues rétractables (12a, 12b) sont fixées à des bras de support pivotants (14), chaque bras de support pivotant (14) présentant une extrémité intérieure fixée à pivotement à la partie de dessous du plancher (4) par une articulation à pivot (16) placée au-dessous de l'axe transversal (6b) du plancher (4), et une extrémité extérieure fixée à l'une ou à plusieurs des roues (12a, 12b), ladite extrémité extérieure étant située vers l'extérieur de l'extrémité intérieure s'étendant vers une extrémité du plancher (4) à la fois dans la configuration rétractée et dans la configuration déployée, de sorte que les roues (12a, 12b) sont montées en vue d'un déplacement en forme d'arc autour de l'articulation à pivot (16).

2. Palette (2) selon la revendication 1, dans laquelle l'articulation à pivot (16) comporte un axe de pivotement qui s'étend de façon essentiellement parallèle au plancher.

3. Palette (2) selon l'une quelconque des revendications précédentes, dans laquelle le mécanisme de verrouillage (20) inclut des moyens permettant de lever les roues (12a, 12b) à distance du sol lorsqu'elles sont complètement rétractées.

4. Palette (2) selon l'une quelconque des revendications précédentes, dans laquelle le mécanisme de verrouillage (20) comporte un élément coudé (22a, 22b, 28, 30).

5. Palette (2) selon l'une quelconque des revendications 1 à 3, dans laquelle le mécanisme de verrouillage comporte un élément de blocage (46).

6. Palette (2) selon l'une quelconque des revendications précédentes, dans laquelle le mécanisme de verrouillage (20) inclut une poignée de fonctionnement (44) placée vers une extrémité de la palette (2).

7. Palette (2) selon l'une quelconque des revendications précédentes, dans laquelle les roues rétractables (12a, 12b) comportent une paire de roulettes pivotantes.
